(19) Europäisches Patentamt
European Patent Office
Office européen des brevets

(11) Veröffentlichungsnummer: **0 446 443 A2**

(12) **EUROPÄISCHE PATENTANMELDUNG**

(21) Anmeldenummer: **90123539.0**

(22) Anmeldetag: **07.12.90**

(51) Int. Cl.5: **C08L 69/00**, //(C08L69/00, 51:04,9:02),(C08L69/00,51:04, 31:04)

(30) Priorität: **16.03.90 DE 4008463**

(43) Veröffentlichungstag der Anmeldung: **18.09.91 Patentblatt 91/38**

(84) Benannte Vertragsstaaten: **DE FR GB IT**

(71) Anmelder: **BAYER AG**

**W-5090 Leverkusen 1 Bayerwerk(DE)**

(72) Erfinder: **Leitz, Edgar, Dr.**
**Goethestrasse 63**
**W-4047 Dormagen 1(DE)**
Erfinder: **Eckel, Thomas, Dr.**
**Gneisenaustrasse 15 a**
**W-4047 Dormagen 1(DE)**
Erfinder: **Wittmann, Dieter, Dr.**
**Wolfskaul 4**
**W-5000 Köln 80(DE)**
Erfinder: **Ott, Karl-Heinz, Dr.**
**Paul-Klee-Strasse 54**
**W-5090 Leverkusen 1(DE)**

(54) **Schlagzähe Polycarbonat-Formmassen.**

(57) Die erfindungsgemäßen thermoplastischen Formmassen aus hoch wärmeformbeständigen Polycarbonaten, Pfropfpolymerisaten und hydrierten, statistisch aufgebauten Nitrilkautschuken oder Ethylen/Vinylacetat-Copolymeren zeichnen sich insbesondere durch eine gute Kältezähigkeit, hohe Wärmeformbeständigkeit und eine gute Beständigkeit gegenüber organischen Lösungsmitteln aus. Sie finden Verwendung zur Herstellung von Formkörpern, insbesondere im Automobil-Außenbereich.

EP 0 446 443 A2

Gegenstand der Erfindung sind thermoplastische Formmassen aus hoch wärmeformbeständigen Polycarbonaten, Pfropfpolymerisaten und hydrierten, statistisch aufgebauten Nitrilkautschuken oder Ethylen/Vinylacetat-Copolymeren sowie die Verwendung der thermoplastischen Formmassen zur Herstellung von Formkörpern der verschiedensten Art.

Thermoplastische Formmassen aus hoch wärmeformbeständigen Polycarbonaten und Modifikatoren zur Verbesserung der Zähigkeit der Polycarbonate sind bekannt und in der deutschen Patentanmeldung P 3 833 953.6 beschrieben. Formkörper aus diesen Formmassen besitzen jedoch im allgemeinen eine ungenügende Kältezähigkeit und Beständigkeit gegenüber organischen Lösungsmitteln, so daß sie für Anwendungen z.B. im Automobil-Außenbereich nur begrenzt geeignet sind.

Aufgabe der vorliegenden Erfindung ist es daher, die beschriebenen Nachteile dieser Formmassen zu vermeiden bzw. verbesserte thermoplastische Formmassen auf Basis hochwärmeformbeständiger Polycarbonate zur Verfügung zu stellen.

Gegenstand der vorliegenden Erfindung sind daher thermoplastische Formmassen enthaltend

A) 20 bis 97, vorzugsweise 40 bis 95, Gew.-Teile eines Polycarbonats auf Basis von substituierten Dihydroxydiphenylcycloalkanen der Formel (I)

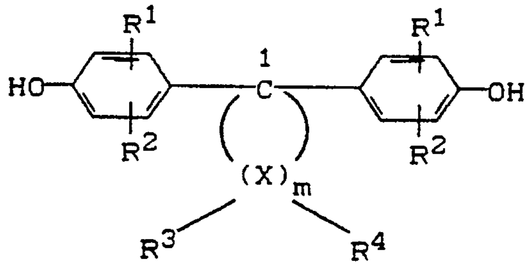

(I) ,

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, bedeuten, |
| m | eine ganze Zahl von 4 bis 7, bevorzugt 4 oder 5, ist, |
| $R^3$ und $R^4$ | für jedes X individuell wählbar sind und unabhängig voneinander Wasserstoff oder $C_1$-$C_6$-Alkyl bedeuten und |
| X | Kohlenstoff bedeutet, mit der Maßgabe, daß an mindestens einem Kohlenstoffatom X $R^3$ und $R^4$ gleichzeitig Alkyl bedeuten, |

B) 3 bis 80, vorzugsweise 5 bis 60, Gew.-Teile eines Pfropfpolymerisats harzbildender Monomerer (Propfmonomere) auf einem Kautschuk (Pfropfgrundlage)
und

C) 1 bis 50, vorzugsweise 3 bis 40, Gew.-Teile eines hydrierten, statistisch aufgebauten Nitrilkautschuks, wobei die Summe aus A + B + C jeweils 100 Gew.-Teile beträgt.

Statt des Nitrilkautschuks der Komponente C) können auch Ethylen/Vinylacetat-Copolymere eingesetzt werden. Deren Menge beträgt 1 bis 50, vorzugsweise 3 bis 40, Gew.-Teile, wobei die Summe aus A + B + C jeweils 100 Gew.-Teile beträgt.

In der Formel (I) sind bevorzugt an 1 bis 2 Kohlenstoffatomen X, insbesondere nur an einem Kohlenstoffatom X, $R^3$ und $R^4$ gleichzeitig Alkyl. Bevorzugter Alkylrest ist Methyl; die X-Atome in $\alpha$-Stellung zu dem diphenylsubstituierten C-Atom (C-1) sind bevorzugt nicht dialkylsubstituiert, dagegen ist die Alkyldisubstitution in $\beta$-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (I), beispielsweise die Diphenole der Formeln (IIa) bis (IIc),

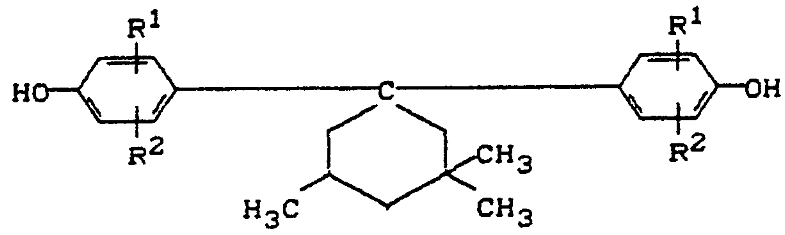

(IIa)

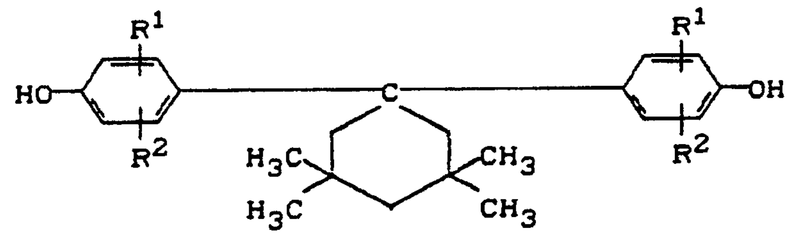

(IIb)

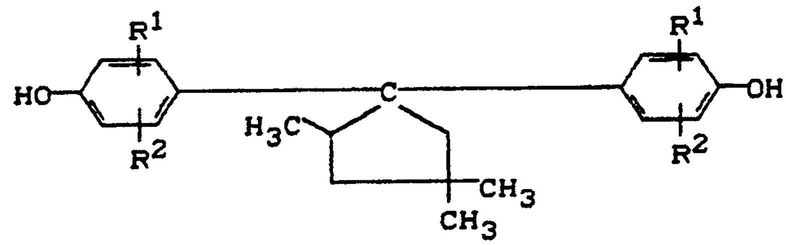

(IIc) ,

wobei das 1,1-Bis-(4-hydroxyphenyl)-3,3,5-trimethylcyclohexan (Formel IIa mit $R^1$ und $R^2$ gleich H) besonders bevorzugt ist.

Die substituierten Dihydroxydiphenylcycloalkane der Formel (I) sowie die entsprechenden Polycarbonate (Komponente A) können gemäß der deutschen Patentanmeldung DE-A 38 32 396 hergestellt werden. Die eingesetzten Polycarbonate sind hochmolekulare, thermoplastische, aromatische Polycarbonate mit $\overline{M}_w$ -(Gewichtsmittelmolekulargewichten) von mindestens 10.000, vorzugsweise von 20.000 bis 300.000.

Erfindungsgemäß.können sowohl ein Diphenol der Formel (I) unter Bildung von Homopolycarbonaten als auch mehrere Diphenole der Formel (I) unter Bildung von Copolycarbonaten eingesetzt werden.

Außerdem ist es möglich, die Diphenole der Formel (I) auch im Gemisch mit anderen bekannten Diphenolen, wie sie beispielsweise in der DE-A 38 32 396 beschrieben sind, zur Herstellung von hochmolekularen, thermoplastischen, aromatischen Polycarbonaten für die Komponente A verwendet werden.

Desweiteren ist es möglich, zur Herstellung der einzusetzenden Polycarbonate die bekannten Verzweiger einzusetzen sowie zur Regelung des Molekulargewichts Kettenabbrecher zu verwenden. Verwiesen wird in diesem Zusammenhang ebenfalls auf die DE-A 38 32 396. Aus der genannten DE-A 38 32 396 sind auch die einzusetzenden Mengen der anderen mitzuverwendenden Diphenole, der Kettenabbrecher und der Verzweiger zu entnehmen.

Als Pfropfpolymerisate der Komponente B kommen Polymerisate harzbildender Monomerer in Frage, die in Gegenwart von Kautschuken hergestellt worden sind. Sie umfassen z.B. Pfropfcopolymerisate mit kautschukelastischen Eigenschaften, die aus mindestens 2 der folgenden Monomeren hergestellt worden sind: Chloropren, Butadien-1,3, Isopren, Styrole, Acrylnitrile, Ethylen, Propylen, Vinylacetat und (Meth-)Acrylsäureester mit 1 bis 8 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393 bis 406, und in C.B. Bucknall, "Toughened Plastics", Appl. Science Publishers, London 1977, beschrieben sind. Bevorzugte Polymerisate B sind partiell vernetzt und besitzen Gelgehalte von über 20 Gew.-%, vorzugsweise über 40 Gew.-%, insbesondere über 60 Gew.-%.

Bevorzugte Pfropfpolymerisate B werden erhalten durch Polymerisation von:

B.1 5 bis 90, vorzugsweise 30 bis 80, Gew.-Teilen, einer Mischung aus

B.1.1 50 bis 95 Gew.-Teilen Styrol, α-Methylstyrol, halogen- oder methylkernsubstituierte Styrole, Methylmethacrylat oder Mischungen dieser Verbindungen und

B.1.2 5 bis 50 Gew.-Teilen Acrylnitril, Methacrylnitril, Methylmethacrylat, Maleinsäureanhydrid, $C_1$-$C_4$-alkyl- oder phenyl-N-substituierte Maleinimide oder Mischungen dieser Verbindungen in Gegenwart von

B.2 10 bis 95, vorzugsweise 20 bis 70, Gew.-Teilen Kautschuk, d.h. Polymerisate mit einer Glasübergangstemperatur unter -10 °C.

Bevorzugte Pfropfpolymerisate B sind z.B. mit Styrol und/oder Acrylnitril und/oder (Meth-)Acrylsäurealkylestern bepfropfte Polybutadiene, Butadien/Styrol-Copolymerisate und Acrylatkautschuke; d.h. Copolymerisate der in der DE-OS 1 694 173 beschriebenen Art; mit Acryl- oder Methacrylsäurealkylestern, Vinylacetat, Acrylnitril, Styrol und/oder Alkylstyrolen bepfropfte Polybutadiene, Butadien/Styrol- oder Butadien/Acrylnitril-Copolyperisate, Polyisobutene oder Polyisoprene, wie sie z.B. in der DE-OS 2 348 377 beschrieben sind.

Besonders bevorzugte Polymerisate B sind ABS-Polymerisate, wie sie in der DE-OS 2 035 390 oder in DE-OS 2 248 242 beschrieben sind.

Ganz besonders bevorzugte Pfropfpolymerisate B sind Pfropfpolymerisate, die durch Pfropfreaktion von

α. 10 bis 70, vorzugsweise 15 bis 50, insbesondere 20 bis 40 Gew.-%, bezogen auf Pfropfprodukt B, mindestens eines Acrylsäureesters oder Methacrylsäureesters oder 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril oder Acrylsäureester oder Methacrylsäureester und 50 bis 90, vorzugsweise 65 bis 80 Gew.-%, bezogen auf Gemisch, Styrol, (Pfropfgrundlage B.1) auf

β. 30 bis 90, vorzugsweise 50 bis 85, insbesondere 60 bis 80 Gew.-%, bezogen auf Pfropfprodukt B, eines Butadien-Polyerisats mit mindestens 50 Gew.-%, bezogen auf β, Butadienresten (Pfropfgrundlage B.2) erhältlich sind,

wobei vorzugsweise der Gelanteil des Butadienpolymerisats β mindestens 70 Gew.-% (in Toluol gemessen), der Pfropfgrad G des Pfropfpolymerisats 0,15 bis 0,55 und der mittlere Teilchendurchmesser $d_{50}$ des Pfropfpolymerisats B 0,05 bis 2 μm, vorzugsweise 0,1 bis 0,6 μm beträgt.

Acrylsäureester und Methacrylsäureester (α) sind Ester der Acrylsäure oder Methacrylsäure und einwertiger Alkohole mit 1 bis 8 C-Atomen.

Bevorzugt sind Methacrylsäuremethylester, -ethylester und -propylester, n-Butylacrylat und t-Butyl-(meth)acrylat.

Das Butadienpolymerisat (β) kann neben Butadienresten bis zu 50 Gew.-%, bezogen auf (β), Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/ oder Vinylether enthalten. Bevorzugt ist reines Polybutadien.

Da bei der Pfropfreaktion die Pfropfmonomeren bekanntlich nicht vollständig auf die Pfropfgrundlage aufgepfropft werden, werden erfindungsggemäß unter Pfropfpolymerisaten B die Produkte verstanden, die durch Polymerisation der Pfropfmonomeren B.1 in Gegenwart der Pfropfgrundlage B.2 gewonnen werden.

Der Pfropfgrad G bezeichnet das Gewichtsverhältnis von aufgepfropften Pfropfmonomeren zur Pfropfgrundlage und ist dimensionslos.

Der mittlere Teilchendurchmesser $d_{50}$ ist der Durchmesser oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Ganz besonders bevorzugte Polymerisate B sind auch Pfropfpolymerisate aus

τ. 20 bis 90 Gew.-% Acrylatkautschuk mit einer Glasübergangstemperatur unter -20 °C als Pfropfgrundlage B.2 und

δ. 10 bis 80 Gew.-%, polymerisierbaren, ethylenisch ungesättigten Monomeren, deren Homo- oder Copolymerisate eine Glasübergangstemperatur über 25 °C haben, als Pfropfmonomere B.1.

Die Acrylatkautschuke (τ) in diesem Pfropfpolymerisat B sind vorzugsweise aus Acrylsäurealkylestern, gegebenenfalls mit bis zu 40 Gew-.%, bezogen auf (τ), anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkyester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage ($\tau$).

Bei cyclischen vernetzenden Monomeren mit mindestens 3 ethylenisch ungesättigten Gruppen ist es vorteilhaft, die Menge auf unter 1 Gew.-% der Pfropfgrundlage ($\tau$) zu beschränken.

Bevorzugte "andere" polymerisierbare, ethylenisch ungesättigte Monomere, die neben den Acrylsäureestern gegebenenfalls zur Herstellung der Pfropfgrundlage ($\tau$) dienen können, sind z.B. Acrylnitril, Styrol, $\alpha$-Methylstyrol, Acrylamide, Vinyl-$C_1$-$C_6$-alkylether Methylmethacrylat, Butadien. Bevorzugte Acrylatkautschuke als Pfropfgrundlage ($\tau$) sind Emulsionspolymerisate, die einen Gelgehalt von mindestens 60 Gew.-% aufweisen.

Weiter als Pfropfgrundlagen gemäß B.2 geeignet sind Silikonkautschuke mit pfropfaktiven Stellen, wie sie in DE-OS 3 704 657, DE-OS 3 704 655, DE-OS 3 631 540 und DE-OS 3 631 539 beschrieben sind.

Der Gelgehalt der Pfropfgrundlage B.2 wird bei 25 °C in Dimethylformamid bestimmt (M. Hoffmann, H. Krömer, R. Kuhn, Polymeranalytik I und II, Georg Thieme-Verlag, Stuttgart 1977).

Die hydrierten Nitrilkautschuke der Komponente C sind Produkte, die durch Hydrieren statistischer Copolymerisate aus 90 bis 45 Gew.-%, bevorzugt 85 bis 50 Gew.-%, insbesondere 82 bis 52 Gew.-%, zumindest eines konjugierten Diens, 10 bis 55 Gew.-%, bevorzugt 15 bis 50 Gew.-%, insbesondere 18 bis 48 Gew.-%, zumindest eines ungesättigten Nitrils und 0 bis 10 Gew.-%, bevorzugt 0 bis 8 Gew.-%, zumindest eines weiteren mit konjugierten Dienen und ungesättigten Nitrilen copolymerisierbaren Monomeren, erhalten wurden.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomeren kommen Vinylaromaten, (Meth)Acrylsäureester mit 1 bis 12 Kohlenstoffatomen in der Alkoholkomponente, $\alpha,\beta$-ungesättigte Mono- oder Dicarbonsäuren in Betracht.

Als beispielhaft sind zu nennen: für die Vinylaromaten Styrol, substituierte Styrole, wie o-, m-, p-Methylstyrol, Ethylstyrol, ferner Vinylnaphthalin, Vinylpyridin, für die (Meth)Acrylsäureester, Meth(meth)-acrylat, Ethyl(meth)acrylat, n-Butyl(meth)acrylat, 2-Ethylhexyl(meth)acrylat, 2-Hydroxypropyl(meth)acrylat, für die ungesättigten Carbonsäuren $\alpha,\beta$-ungesättigte Monocarbonsäuren mit 3 bis 5 Kohlenstoffatomen, wie Acrylsäure-, Methacrylsäure- und Crotonsäure sowie $\alpha,\beta$-ungesättigte Dicarbonsäuren mit 4 bis 5 Kohlenstoffatomen, wie Malein-, Fumar-, Citracon- und Itaconsäure, ferner die Halbester der $\alpha,\beta$-ungesättigten Dicarbonsäuren, wie Maleinsäure-n-dodecylhalbester oder Fumarsäure-n-butylhalbester.

Als weitere Monomeren kommen außerdem Vinylchlorid, Vinylidenchlorid, N-Methylolacrylamid, Vinylalkylether mit 1 bis 4 Kohlenstoffatomen in der Alkylgruppe, Vinylester von Carbonsäuren mit 1 bis 18 Kohlenstoffatomen, wie Vinylacetat oder Vinylstearat in Betracht.

Spezielle Beispiele für die zu hydrierenden Copolymerisate umfassen Acrylnitril-Isopren-Copolymerisate, Acrylnitril-Isopren-Butadien-Terpolymerisate, Acrylnitril-Butadien-n-Butylacrylat-Terpolymerisate, Acrylnitril-Butadien-2-Hydroxypropylmethacrylat-Terpolymerisate und Acrylnitril-Butadien-Methacrylsäure-Terpolymerisate. Acrylnitril-Butadien-Copolymerisate sind besonders bevorzugt.

Die Herstellung hydrierter Nitrilkautschuke unter Erhalt der Nitrilgruppen ist z.B. aus DE-OS 3 329 974 bekannt.

Der Hydriergrad (Prozentsatz der hydrierten C-C-Doppelbindungen, bezogen auf die Gesamtzahl der ursprünglich im Polymeren vorhandenen C-C-Doppelbindungen) des Polymeren gemäß Komponente C wird IR- oder NMR-spektroskopisch bestimmt und beträgt mindestens 80 %, vorzugsweise mindestens 90 %, insbesondere 95 %.

Die hydrierten Polymeren gemäß Komponente C sind gelfrei und in Ketonen, wie Aceton oder Butanon, in Ethern, wie Tetrahydrofuran oder Dioxan, oder in chlorierten Kohlenwasserstoffen, wie Dichlormethan oder Chlorbenzol löslich. Die Molekulargewichte der hydrierten Nitrilkautschuke liegen zwischen 500 und 800.000 (g/Mol), bevorzugt zwischen 10.000 und 600.000 (g/Mol), insbesondere zwischen 30.000 und 400.000 (g/Mol) ($\overline{M}_n$, Zahlenmittel, ermittelt durch Gelpermeationschromatographie).

Die statt den hydrierten Nitrilkautschuken einzusetzenden Ethylen/Vinylacetat-Copolymere enthalten 10 bis 90 Gew.-%, vorzugsweise 20 bis 85 Gew.-%, Vinylacetat, bezogen auf das Gesamt-Copolymere. Die Herstellung der Copolymeren ist bekannt und beispielsweise in "Encyclopedia of Polymer Science and Technology", Bd. 15, 577 bis 677 (1971), EP 0 078 122, DE 1 815 337, DE 1 914 756 und DE 3 000 009 beschrieben.

Die erfindungsgemäßen Formmassen können weitere, für Polycarbonate sowie Pfropfpolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcompoundiert oder schmelzextrudiert.

Die Bestandteile können nacheinander oder gleichzeitig gemischt werden.

Die erfindungsgemäßen Formmassen können zur Herstellung von Formkörpern jeder Art, z.B. durch Spritzgießen verwendet werden. Beispiele für Formkörper sind: Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Die erfindungsgemäßen thermoplastischen Formmassen zeichnen sich durch sehr gute Kerbschlagzähigkeiten auch bei niedrigen Temperaturen, verbesserte Lösungsmittelbeständigkeit (ESC-Verhalten) und hohe Wärmeformbeständigkeit aus.

Beispiele

Komponente A 1

Polycarbonat auf Basis Bisphenol A / 1,1-Bis-(4-hydroxyphenyl)-3,3,5-trimethylcyclohexan (Molverhältnis 55:45):

1.436,4 g (6,3 Mol) Bisphenol A (2,2-Bis-(4-hydroxyphenyl)propan, 2.387,0 g (7,7 Mol) 1,1-Bis-(4-hydroxyphenyl)-3,3,5-trimethylcyclohexan, 7.476,0 g (84 Mol) 45 %ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13 bis 14 und 21 bis 25 °C 2.772 g (28 Mol) Phosgen eingeleitet. Danach werden 14 ml Ethylpiperidin zugegeben und noch 45 Min. gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206 °C bestimmt (DSC).

Komponente A 2

Polycarbonat auf Basis Bisphenol A / 1,1-Bis-(4-hydroxyphenyl)-3,3,5-trimethylcyclohexan (Molverhältnis 65:35). Herstellung wie unter A 1.

Komponente B 1

Pfropfpolymerisat von 50 Gew.-Teilen eines Copolymerisats aus Styrol und Acrylnitril im Verhältnis 72:28 auf 50 Gew.-Teile teilchenförmigen vernetzten Polybutadienkautschuk (mittlerer Teilchendurchmesser $d_{50}$ = 0,4 µm) hergestellt durch Emulsionspolymerisation.

Komponente B 2

Pfropfpolymerisat von 50 Gew.-Teilen eines Copolymerisats aus Styrol und Acrylnitril im Verhältnis 90:10 auf 50 Gew.-Teile teilchenförmigen vernetzten Polybutadienkautschuk (mittlerer Teilchendurchmesser $d_{50}$ = 0,4 µm) hergestellt durch Emulsionspolymerisation.

Komponente C 1

Hydrierter Nitrilkautschuk aus einem statistischen Acrylnitril-Butadien-Copolymer mit einem Acrylnitrilgehalt von 34,1 Gew.-%, der einen Hydriergrad größer 99,2 % (infrarotspektroskopisch bestimmt) und eine

Mooney-Viskosität ML 1 + 4 (100°C) von 70 aufweist (gemessen nach DIN 53 523).

Komponente C 2

Copolymer aus Ethylen und Vinylacetat mit einem Gew.-Verhältnis von Ethylen zu Vinylacetat von 30:70.

Herstellung und Prüfung der erfindungsgemäßen Formmassen

Die Komponenten A, B und C wurden auf einem 1,3 l-Innenkneter bei Temperaturen zwischen 250 und 300°C aufgeschmolzen und homogenisiert.

Von den Formmassen wurden auf einer Spritzgußmaschine Stäbe der Abmessung 80 x 10 x 4 mm (Verarbeitungstemperatur: 280°C) hergestellt, an denen die Kerbschlagzähigkeit (nach Methode ISO 180 1A) bei den in Tabelle 2 angegebenen Temperatur gemessen wurde.

Das ESC-Verhalten wurde an Stäben der Abmessung 80 x 10 x 4 mm (Massetemperatur 280°C) untersucht. Als Kraftstoffsimulanz wurde eine Mischung aus 50 Vol.-%, Toluol/50 Vol.-% Isooctan und 42,5 Vol.-% Toluol/42,5 Vol.-% Isooctant/15 Vol.-% Methanol verwendet. Die Probekörper wurden mittels einer Kreisbogenschablone vorgedehnt und 5 Minuten bei Zimmertemperatur im Kraftstoffsimulanz gelagert. Die Vordehnung $\epsilon_x$ betrug 0,4 bis 2,4 %. Das Spannungsrißverhalten wurde über den Bruch in Abhängigkeit von der Vordehnung beurteilt.

Die Vicat-Erweichungstemperaturen (Methode A/120) wurde an Stäben der Abmessung 80 x 10 x 4 mm nach DIN 53 460 bestimmt.

**Tabelle 1**

Zusammensetzung der Mischungen

| Beispiel Nr. | 1 | 2 | 3 | 4 | 5 | 6 | 7 | 8 |
|---|---|---|---|---|---|---|---|---|
| | | | | | (Vergleichsbeispiele) | | | |
| Komponenten A.1 | - | 60 | - | - | - | - | - | 80 |
| A.2 | 70 | - | 85 | 80 | 100 | 90 | 80 | - |
| B.1 | 20 | - | 10 | 10 | - | 10 | 20 | 20 |
| B.2 | - | 20 | - | - | - | - | - | - |
| C.1 | 10 | 20 | - | - | - | - | - | - |
| C.2 | - | - | 5 | 10 | - | - | - | - |

Tabelle 2

Izod-Kerbschlagzähigkeit und Wärmeformbeständigkeit

| Beispiel Nr. | | 1 | 2 | 3 | 4 | 5 | 6 | 7 | 8 |
|---|---|---|---|---|---|---|---|---|---|
| | | | | | | (Vergleichsbeispiele) | | | |
| ak ($kJ/m^2$) | | | | | | | | | |
| ($280^0$ C) | RT | 43z | 42z | 7x41z<br>3x35s | 43z | 8s | 19s | 33s | 27s |
| | + $10^0$ C | 5x41z<br>5x39s | - | 33s | 41z | - | - | - | - |
| | $0^0$ C | 6x41z<br>4x38s | - | - | 6x33z<br>4x27s | - | - | 26s | - |
| | - $10^0$ C | 38s | 42z | - | 22s | - | - | - | - |
| | - $20^0$ C | - | 6x41z | - | - | - | - | - | - |
| Vicat A/120 ($^0$C) | | 172 | 175 | 173 | 138 | 185 | 175 | 175 | 194 |

z: Zähbruch, s: Sprödbruch,

Tabelle 2 (Fortsetzung)

Lösungsmittelbeständigkeit

| Beispiel Nr. | 1 | 2 | 3 | 4 | 5 | 6 | 7 | 8 |
|---|---|---|---|---|---|---|---|---|
| | | | | | (Vergleichsbeispiele) | | | |
| Isooctan/Toluol | | | | | | | | |
| Verhalten bei Vordehnung $\varepsilon_x$ (%) | 1,0 gebr. | 2,4 n.g. | 0,4 gebr. | 1,0 gebr. | 0,4 gebr. | 0,4 gebr. | 0,4 gebr. | 0,4 gebr. |
| Isooctan/Toluol/ Methanol | | | | | | | | |
| Verhalten bei Vordehnung $\varepsilon_x$ (%) | 2,4 n.g. | 2,4 n.g. | 0,6 gebr. | 2,4 n.g. | 0,4 gebr. | 0,4 gebr. | 0,4 gebr. | 0,4 gebr. |

gebr.: gebrochen
n.g. : nicht gebrochen

Wie Tabelle 2 zeigt, führt der Zusatz von Pfropfpolymerisat/hydrierter Nitrilkautschuk oder Pfropfpolymerisat/Ethylen-Vinylacetat-Copolymer zu Polycarbonaten auf Basis von substituierten Cycloalkanen zu einer deutlich verbesserten Kerbschlagzähigkeit bei Raumtemperatur und bei tieferen Temperaturen. Zusätzlich wird die Lösungsmittelbeständigkeit von Spritzgußteilen angehoben.

## Patentansprüche

1. Thermoplastische Formmassen enthaltend

A) 20 bis 97 Gew.-Teile eines Polycarbonats auf Basis von substituierten Dihydroxydiphenylcycloalkanen der Formel

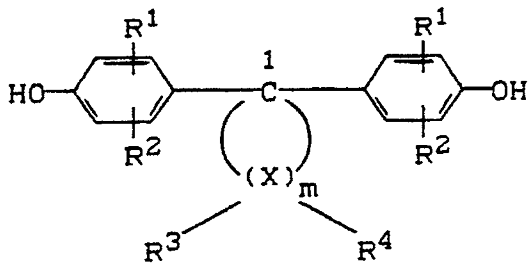

,

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl oder $C_7$-$C_{12}$-Aralkyl bedeuten,

m eine ganze Zahl von 4 bis 7 ist,

$R^3$ und $R^4$ für jedes X individuell wählbar sind und unabhängig voneinander Wasserstoff oder $C_1$-$C_6$-Alkyl bedeuten

und

X Kohlenstoff bedeutet, mit der Maßgabe, daß an mindestens einem Kohlenstoffatom X $R^3$ und $R^4$ gleichzeitig Alkyl bedeuten,

B) 3 bis 80 Gew.-Teile eines Pfropfpolymerisats harzbildender Monomerer (Propfmonomere) auf einem Kautschuk (Pfropfgrundlage)

und

C) 1 bis 50 Gew.-Teile eines hydrierten, statistisch aufgebauten Nitrilkautschuks, wobei die Summe aus A + B + C jeweils 100 Gew.-Teile beträgt.

2. Thermoplastische Formmassen gemäß Anspruch 1, dadurch gekennzeichnet, daß sie als Komponente C 1 bis 50 Gew.-Teile eines Ethylen/Vinylacetat-Copolymeren enthalten, wobei die Summe aus A + B + C jeweils 100 Gew.-Teile beträgt.

3. Thermoplastische Formmassen nach Ansprüchen 1 und 2, dadurch gekennzeichnet, daß Pfropfpolymerisate als Komponente B eingesetzt werden, die erhalten werden durch Polymerisation von

B.1 5 bis 90 Gew.-Teilen einer Mischung aus

B.1.1 50 bis 95 Gew.-Teilen Styrol, α-Methylstyrol, halogen- oder methylkernsubstituierte Styrole, Methylmethacrylat oder Mischungen dieser Verbindungen und

B.1.2 5 bis 50 Gew.-Teilen Acrylnitril, Methacrylnitril, Methylmethacrylat, Maleinsäureanhydrid, $C_1$-$C_4$-alkyl- oder phenyl-N-substituierte Maleinimide oder Mischungen dieser Verbindungen in Gegenwart von

B.2 10 bis 95 Gew.-Teilen eines Kautschuks mit einer Glasübergangstemperatur von unter -10° C.

4. Thermoplastische Formmassen gemäß Ansprüchen 1 bis 3, dadurch gekennzeichnet, daß als hydrierte Nitrilkautschuke Polymerisate eingesetzt werden, die durch Hydrieren statistischer Copolymerisate aus 90 bis 45 Gew.-% zumindest eines konjugierten Diens, 10 bis 55 Gew.-% zumindest eines ungesättigten Nitrils und 0 bis 10 Gew.-% zumindest eines weiteren, mit kanjugierten Dienen und ungesättigten Nitrilen copolymerisierbaren Monomeren erhalten wurden.

5. Thermoplastische Formmassen nach Ansprüchen 1 bis 4, dadurch gekennzeichnet, daß als Ethylen/Vinylacetat-Copolymere solche Produkte eingesetzt werden, die neben dem Ethylen 10 bis 90 Gew.-% Vinylacetat enthalten.

6. Verwendung der thermoplastischen Formmassen nach Ansprüchen 1 bis 5 zur Herstellung von Formkörpern.